# EUROPEAN PATENT SPECIFICATION

(11) **EP 0 942 798 B1**
(45) Date of publication and mention of the grant of the patent: **18.09.2002**
(21) Application number: 97911568.0
(22) Date of filing: 31.10.1997
(51) Int. Cl.: B23B 31/11, B23B 51/00, B23C 5/26

(54) **TOOL FOR CHIP-REMOVAL**
SPANABHEBENDES WERKZEUG
OUTIL D'EVACUATION DE COPEAUX

(30) Priority: 03.12.1996 SE 9604445
(43) Date of publication of application: 22.09.1999
(60) Divisional application: 02008638.5
(73) Proprietor: SECO TOOLS AB (publ), S-737 82 Fagersta (SE)
(72) Inventor: STRAND, Bengt, S-737 32 Fagersta (SE); BERGLÖW, Karl-Erik, S-737 33 Fagersta (SE)
(74) Representative: Taquist, Lennart
(86) International application number: PCT/SE97/01822
(87) International publication number: WO 98/024579

(56) References cited:
- EP-A- 0 298 937
- EP-A- 0 638 384
- FR-A- 2 602 162
- GB-A- 2 158 374

## Description

### Background of the invention

The present invention relates to a tool for rotary chip removal machining and to a cutting head for the tool according to the preambles of the independent claims 1 and 5 respectively.

### Prior art

It is previously known through applicants US-A-4,850,759 to provide a solution to the problem of providing milling and drilling tools in small dimensions with interchangeable cutting edges. However in some cases at high rotational speeds, the known tool tends to vibrate and create unwanted patterns or vibrational marks in the work piece. This in combination with that the tool sometimes also gets overheated has been problematic for the user.

### Objects of the invention

One object of the present invention is to provide a tool, which stays rigid also at high rotational speeds.

Another object of the present invention is to provide a tool, which has good cooling.

Still another object of the present invention is to provide a cutting head, which enables good stability and good cooling.

These and other objects of the present invention are realized by a tool and a cutting head of the above-mentioned type, which have obtained the characteristics indicated in claims 1 and 5 respectively.

### Short description of the drawings

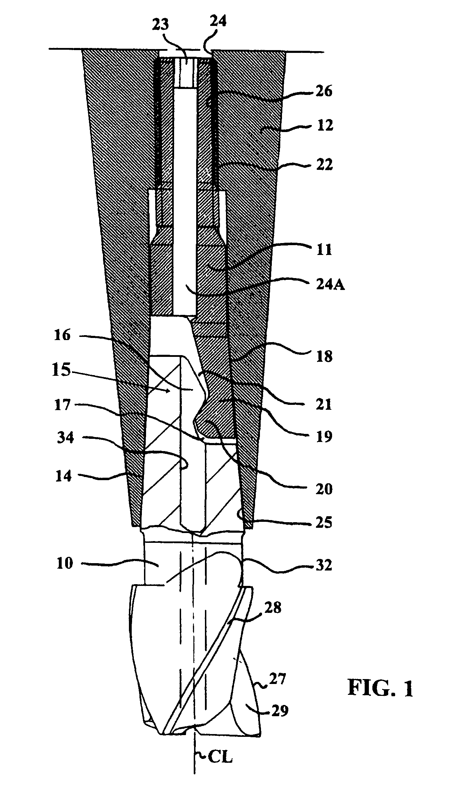

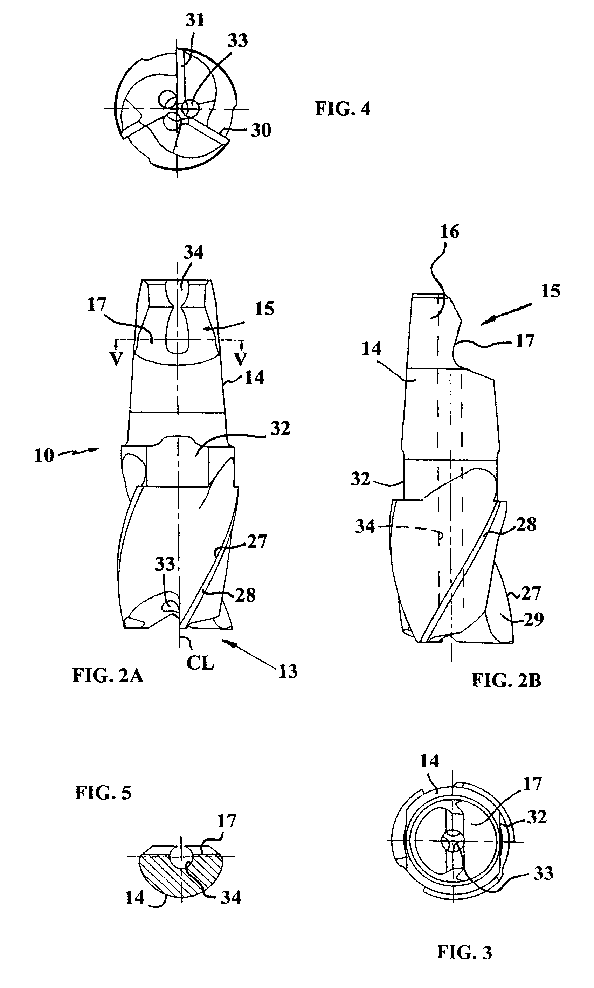

Below an embodiment of the present invention will be described with reference to the enclosed drawings, wherein Fig. 1 shows a tool according to the present invention in an assembled condition, partly in cross-section; Figs. 2A and 2B show side views of a cutting head according to the present invention, more in detail; Fig. 3 shows a bottom view of a cutting head according to the present invention; Fig. 4 shows a top view of a cutting head according to the present invention; Fig. 5 shows a cross section according to the line V-V in Fig. 2A.

### Detailed description of the invention

The embodiment of a tool according to the present invention shown in Fig. 1, comprises a cutting head 10, a locking screw 11 as well as a shank 12. The tool comprises an axial channel, which extends beyond hook-shaped means 15, 19 on the cutting head and the locking screw, respectively. The channel runs through the hook-shaped means 15 of the cutting head, but preferably does not extend through the hook-shaped means 19 of the locking screw. The channel function is partly to transfer flush medium and partly to diminish the masses of the means. The channel breaks through border surfaces of the hook-shaped means 15 of the cutting head and the channel occupies, in the area of the hook-shaped means, a bigger space in the cutting head than in the locking screw. In this manner the center of gravity in the area of the hook-shaped means, is displaced closer to the axis CL of rotation of the tool, and therefore the tool becomes dynamically centered. The asymmetrical means 15 of the material with highest density comprises a mass diminishing recess 34.

The cutting head 10 is provided with at least one cutting edge at the end 13 facing away from the shank 12, which is given different design depending on the area of application. A preferred shape of the forward end of the cutting head 10 is shown in detail in Figs. 2A - 5. The cutting head 10 is performed in hard material, preferably cemented carbide and comprises three screw-shaped first cutting edges or major cutting edges 27. The number of major cutting edges may alternatively be one, two or four to six. Each major cutting edge 27 is formed along the intersection line of a clearance surface or protruding land 28 and a chip surface or chip flute 29. The major cutting edges 27 lie in a common, imaginary cylinder, which is concentric with the axis CL of rotation of the cutting head and of the tool. Each chip flute 29 is concavely formed and extends from a connected second cutting edge or minor cutting edge 30 in direction axially inwardly from a bevel or a free end 13 of the cutting head. The minor cutting edge 30 is formed at the intersection of the chip flute 29 and an end surface 31 and essentially has a radial extension inwards from the imaginary cylinder, whereof a minor cutting edge substantially connects to the axis of rotation CL of the cutting head such that the tool can be able to drill downwards into the work piece during milling. Each pair of major and minor cutting edges is fed with flush medium via a hole 33. The three holes 33 are arranged suitably symmetrical about the axis of rotation of the cutting head. The holes connect to a central channel 34, which terminates in the area of the other free end of the cutting head.

At the end facing towards the shank 12 the cutting head is provided with a first conical portion 14, which is provided with a first means for engagement 15, which in the shown embodiment comprises a first lip 16 as well as a first recess 17. The intermediate portion of the cutting head 10 is provided with a key grip 32, the application of which is explained below.

The locking screw 11, which preferably is performed in steel, has a second conical portion 18 at the end facing towards the cutting head, which is provided with a second means for engagement 19, which is intended to cooperate with the first the means for engagement 15. Such as shown in Fig. 1 the provision of the second means for engagement 19 implies that a substantial part of the second conical portion 18 has been removed. The second means for engagement 19 comprises a second lip 20 as well as a second recess 21. In active position the first lip 16 cooperates with the second recess 21 and the second lip 20 with the first recess 17. The second lip 20 is preferably intact, that is, no recess for flush medium is made in this lip, and therefore the mass in the second means for engagement 19 is relatively alike as that of the first means for engagement 15 such that wabbling is substantially avoided.

Axially inside the second means for engagement 19, in the axial direction, the locking screw 11 has an externally threaded, preferably cylindrical portion 22. An Allen key grip 23 is provided at the axially innermost end of the locking screw 11, whereby loosening or tightening of the locking screw 11 is made possible through the internal channel 24 of the shank 12. Normally however, tightening or loosening of the locking screw is accomplished through the external key grip 32. Alternatively the thread 26 may be arranged at an end of a releaseable sleeve, the other end of which then is provided with an external thread as well as a key grip.

The shank 12 is provided with a conical seat 25 at the end facing towards the cutting head 10, which receives the first and second conical portions 14 and 18 of the cutting head 10 and the locking screw 11, respectively. Inside the conical seat 25 the shank 12 has a substantially cylindrical, internally threaded portion 26, which cooperates with the external threaded portion 22 of the locking screw 11. The portion 26 is situated axially outside of the above-mentioned channel 24.

Mounting and dismounting of the tool is more closely described in US-A-4,850,759. Cooperation between the external thread 22 and the internal thread 26 entails that the locking screw 11 and thereby also the cutting head 10 are displaced axially into the shank 12 until the cone-shaped portion 14 comes into abutment against the conical seat 25, i.e. the position according to Fig. 1 has been achieved. The cutting head 10 is now anchored in the shank 12 in a satisfactorily manner. Thereby a through the tool going channel for flush medium has been formed via the recesses 24, 24A, 34 and 33.

The threads 22 and 26 are performed as right-hand threads at tools for right-hand cutting and as left-hand threads at tools for left-hand cutting.

For the above described embodiment the cone angle for the cutting head and seat should be less than 25°. In addition shall be pointed out that the described embodiment relates to milling cutters, i.e. tools which rotate about their longitudinal center axes. Milling cutters with small cutting portions are expected to be the first area of application for the present invention but also drilling tools fall within the scope of the invention.

The invention is in no way limited to the above described embodiments but may be freely varied within the limits of the subsequent claims.

## Claims

1. Tool for rotary chip removal machining, said tool comprising a cutting head (10), a retention means (11) and a shank (12), wherein the cutting head (10) is provided with at least one cutting edge (27,30), which is integral with the cutting head, said cutting head and the retention means comprising overlapping first (15) and second (19) asymmetrical means of separate material for mounting of the cutting head to the shank,
**characterized in that** the first asymmetrical means (15) of the cutting head (10) comprises a mass diminishing central recess (34) and **in that** the tool comprises an axial channel (24,24A,33,34) extending through at least the first asymmetrical means (15) in order to partly transfer flush medium and partly for diminishing the mass of the first asymmetrical means (15).

2. Tool according to claim 1,
**characterized in that** the overlapping asymmetrical means consist of hook-shaped means (15,19) and that the cutting head is performed in cemented carbide and that the second asymmetrical means (19) is performed in steel.

3. Tool according to anyone of claim 1 or 2,
**characterized in that** the retention means (11) has an externally threaded portion (22) and is intended to be in engagement with an internally threaded recess (26) in the shank (12) in active position of the tool and **in that** the cutting head (10) is provided with a conical portion (14) and the shank (12) is provided with a conical seat (25), which receives the conical portion (14) in active position of the tool, said cutting head (10) being releaseably connected with the retention means (11) via the hook-shaped means (15,19).

4. Tool according to claim 3,
**characterized in that** the channel breaks through border surfaces of the hook-shaped means (15) of the cutting head (10).

5. Cutting head (10) with at least one cutting edge (27,30), said cutting head intended to enter into a tool for rotary chip removal machining, said tool comprising the cutting head (10), a retention means (11) and a shank (12), wherein the cutting head (10) is provided with at least one cutting edge (27,30) which is integral with the cutting head, said cutting head and said retention means comprising overlapping asymmetrical means (15,19) of separate material for mounting of the cutting head to the shank,
**characterized in that** a first asymmetrical means (15) of the cutting head (10) comprises a mass diminishing central recess (34), which extends through the first asymmetrical means (15) in order to partly transfer flush medium and partly to diminish the mass of the first asymmetrical means (15).

6. Cutting head according to claim 5,
**characterized in** the first asymmetrical means consists of a hook-shaped means (15) and that the cutting head is performed in cemented carbide.

7. Cutting head according to claim 6,
**characterized in that** the central recess (34) breaks through border surfaces of the hook-shaped means (15) of the cutting head.

8. Cutting head according to claim 7,
**characterized in that** the cutting head (10) comprises one to six screw-shaped major cutting edges (27), each said major cutting edge (27) being formed along the line of intersection of a clearance surface (28) and a chip surface (29) and that the major cutting edges (27) are provided in a common, imaginary cylinder, which is concentric with the axis (CL) of rotation of the cutting head.

9. Cutting head according to claim 8,
**characterized in that** each major cutting edge (27) connects to a minor cutting edge (30) and that each pair of major and minor cutting edges is fed with flush medium via a hole (33), said holes (33) being arranged symmetrically about the axis (CL) of rotation of the cutting head and that the holes connect to the central recess (34) which terminate in the area of the other free end of the cutting head (10).

## Patentansprüche

1. Werkzeug zum drehenden, spanabhebenden Bearbeiten mit einem Schneidkopf (10), einem Rückhaltemittel (11) und einem Schaft (12), wobei der Schneidkopf (10) mit mindestens einer Schneidkante (27, 30) versehen ist, die mit dem Schneidkopf einstückig ist, wobei der Schneidkopf und das Rückhaltemittel überlappende erste (15) und zweite (19) asymmetrische Mittel aus unterschiedlichem Material aufweisen zum Befestigen des Schneidkopfes am Schaft,
**dadurch gekennzeichnet, daß** das erste asymmetrische Mittel (15) des Schneidkopfes (10) eine die Masse verringernde mittige Ausnehmung (34) aufweist und das Werkzeug einen axialen Kanal (24, 24A, 33, 34) aufweist, welcher sich durch mindestens das erste asymmetrische Mittel (15) erstreckt, um teilweise Spülmedium zu transferieren und teilweise die Masse des ersten asymmetrischen Mittels (15) zu verringem.

2. Werkzeug nach Anspruch 1, **dadurch gekennzeichnet, daß** das überlappende asymmetrische Mittel aus hakenförmigen Mitteln (15, 19) besteht und der Schneidkopf aus Sinterkarbid ausgeführt ist und daß das zweite asymmetrische Mittel (19) aus Stahl ausgeführt ist.

3. Werkzeug nach Anspruch 1 oder 2, **dadurch gekennzeichnet, daß** das Rückhaltemittel (11) einen außen mit Gewinde versehenen Abschnitt (22) hat und dafür vorgesehen ist, mit einer mit Innengewinde versehenen Ausnehmung (26) in dem Schaft (12) in aktiver Position des Werkzeuges in Eingriff zu kommen, und daß der Schneidkopf (10) mit einem konischen Abschnitt (14) versehen ist und der Schaft (12) mit einem konischen Sitz (25) versehen ist, welcher den konischen Abschnitt (14) in aktiver Position des Werkzeuges aufnimmt, wobei der Schneidkopf (10) über das hakenförmige Mittel (15, 19) mit dem Rückhaltemittel (11) lösbar verbunden ist.

4. Werkzeug nach Anspruch 3, **dadurch gekennzeichnet, daß** der Kanal durch Grenzflächen des hakenförmigen Mittels (15) des Schneidkopfes (10) durchbricht.

5. Schneidkopf (10) mit mindestens einer Schneidkante (27, 30), wobei der Schneidkopf dafür vorgesehen ist, für das drehende, spanabhebende Bearbeiten in einem Werkzeug einzutreten, welches den Schneidkopf (10), ein Rückhaltemittel (11) und einen Schaft (12) aufweist, wobei der Schneidkopf (10) mit mindestens einer Schneidkante (27, 30) versehen ist, die mit dem Schneidkopf einstückig ist, der Schneidkopf und das Rückhaltemittel überlappende asymmetrische Mittel (15, 19) aus unterschiedlichem Material zum Befestigen des Schneidkopfes am Schaft aufweisen,
**dadurch gekennzeichnet, daß** ein erstes asymmetrisches Mittel (15) des Schneidkopfes (10) eine die Masse verringemde, mittige Ausnehmung (34) aufweist, welche sich durch das erste asymmetrische Mittel (15) erstreckt, um teilweise Spülmedium zu transferieren und teilweise die Masse des ersten asymmetrischen Mittels (15) zu verringern.

6. Schneidkopf nach Anspruch 5, **dadurch gekennzeichnet, daß** das erste asymmetrische Mittel aus einem hakenförmigen Mittel (15) besteht und daß der Schneidkopf in Sinterkarbid ausgeführt ist.

7. Schneidkopf nach Anspruch 6, **dadurch gekennzeichnet, daß** die Mittenausnehmung (34) durch Grenzflächen des hakenförmigen Mittels (15) des Schneidkopfes durchbricht.

8. Schneidkopf nach Anspruch 7, **dadurch gekennzeichnet, daß** er eine bis sechs schraubenförmige Hauptschneidkanten (27) aufweist, deren jede längs der Schnittlinie einer Freifläche (28) und einer Spanfläche (29) gebildet ist, und daß die Hauptschneidkanten (27) in einem gemeinsamen, imaginären Zylinder vorgesehen sind, der zu der Drehachse (CL) des Schneidkopfes konzentrisch ist.

9. Schneidkopf nach Anspruch 8, **dadurch gekennzeichnet, daß** jede Hauptschneidkante (27) mit einer Nebenschneidkante (30) in Verbindung steht und daß jedes Paar von Haupt- und Nebenschneidkanten mit Spülmedium über ein Loch (33) versorgt wird, wobei die Löcher (33) symmetrisch um die Drehachse (CL) des Schneidkopfes angeordnet sind, und daß die Löcher mit der Mittenausnehmung (34) in Verbindung stehen, welche im Bereich des anderen freien Endes des Schneidkopfes (10) endet.

## Revendications

1. Outil d'usinage rotatif par enlèvement de copeaux, ledit outil comprenant une tête de coupe (10), un moyen de retenue (11) et une tige (12), dans lequel la tête de coupe (10) est munie d'au moins une arête de coupe (27, 30), qui est intégrée à la tête de coupe, ladite tête de coupe et le moyen de retenue comprenant des premier (15) et second (19) moyens asymétriques se chevauchant faits de matériau séparé, destinés à monter la tête de coupe sur la tige,
**caractérisé en ce que** le premier moyen asymétrique (15) de la tête de coupe (10) comprend un évidement central de diminution de masse (34) et **en ce que** l'outil comprend un canal axial (24, 24A, 33, 34) s'étendant au travers au moins du premier moyen asymétrique (15) de manière à transférer partiellement un milieu de rinçage et destiné partiellement à diminuer la masse du premier moyen asymétrique (15).

2. Outil selon la revendication 1,
**caractérisé en ce que** les moyens asymétriques se chevauchant sont constitués de moyens en forme de crochet (15, 19) et **en ce que** la tête de coupe est réalisée en carbure cémenté et **en ce que** le second moyen asymétrique (19) est réalisé en acier.

3. Outil selon l'une quelconque des revendications 1 et 2,
**caractérisé en ce que** le moyen de retenue (11) comporte une partie filetée (22) et est prévu pour être en prise avec un évidement taraudé (26) dans la tige (12) en position active de l'outil et **en ce que** la tête de coupe (10) est munie d'une partie conique (14) et **en ce que** la tige (12) est munie d'un siège conique (25) qui reçoit la partie conique (14) dans la position active de l'outil, ladite tête de coupe (10) étant reliée de façon amovible au moyen de retenue (11) par l'intermédiaire des moyens en forme de crochet (15, 19).

4. Outil selon la revendication 3,
**caractérisé en ce que** le canal débouche dans des surfaces de limite du moyen en forme de crochet (15) de la tête de coupe (10).

5. Tête de coupe (10) comprenant au moins une arête de coupe (27, 30), ladite tête de coupe étant prévue pour pénétrer dans un outil destiné à un usinage rotatif par enlèvement de copeaux, ledit outil comprenant la tête de coupe (10), un moyen de retenue (11) et une tige (12), dans laquelle la tête de coupe (10) est munie d'au moins une arête de coupe (27, 30) qui est intégrée à la tête de coupe, ladite tête de coupe et ledit moyen de retenue comprenant des moyens asymétriques se chevauchant (15, 19) de matériau séparé destinés à monter la tête de coupe sur la tige,
**caractérisée en ce qu'**un premier moyen asymétrique (15) de la tête de coupe (10) comprend un évidement central de diminution de masse (34), qui s'étend au travers du premier moyen asymétrique (15) de manière à transférer partiellement un milieu de rinçage et à diminuer partiellement la masse du premier moyen asymétrique (15).

6. Tête de coupe selon la revendication 5,
**caractérisée en ce que** le premier moyen asymétrique est constitué d'un moyen en forme de crochet (15) et **en ce que** la tête de coupe est réalisée en carbure cémenté.

7. Tête de coupe selon la revendication 6,
**caractérisée en ce que** l'évidement central (34) débouche dans les surfaces de limite du moyen en forme de crochet (15) de la tête de coupe.

8. Tête de coupe selon la revendication 7,
**caractérisée en ce que** la tête de coupe (10) comprend une à six arêtes de coupe principales en forme de vis (27), chaque dite arête de coupe principale (27) étant formée le long de la ligne d'insertion d'une surface de dépouille (28) et d'une surface d'enlèvement de copeaux (29) et **en ce que** les arêtes de coupe principales (27) sont réalisées dans un cylindre imaginaire commun qui est concentrique de l'axe (CL) de rotation de la tête de coupe.

9. Tête de coupe selon la revendication 8,
**caractérisée en ce que** chaque arête de coupe principale (27) est reliée à une arête de coupe mineure (30) et **en ce que** chaque paire d'arêtes de coupe principale et mineure est alimentée en milieu de rinçage par l'intermédiaire d'un trou (33), lesdits trous (33) étant disposés de façon symétrique autour de l'axe (CL) de rotation de la tête de coupe et **en ce que** les trous sont reliés à l'évidement central (34) qui aboutit dans la zone de l'autre extrémité libre de la tête de coupe (10).
